# EUROPEAN PATENT SPECIFICATION

(11) **EP 2 471 701 B1**
(45) Date of publication and mention of the grant of the patent: **31.08.2016**
(21) Application number: 11001646.6
(22) Date of filing: 01.03.2011
(51) Int. Cl.: B62K 15/00

(54) **Hinge for a folding bicycle**
Scharnier für ein Klappfahrrad
Charnière pour bicyclette pliable

(30) Priority: 31.12.2010 TW 099147302
(43) Date of publication of application: 04.07.2012
(73) Proprietor: MOBILITY HOLDINGS, LIMITED, Hong Kong (HK)
(72) Inventor: Lin, Eric Yi Hung, San Chung City Taipei-Hsien (TW); Liu, Ming-Po, San Chung City Taipei-Hsien (TW); Uimonen, Joakim, San Chung City Taipei Hsien (TW)
(74) Representative: Altenburg, Bernardus Stephanus Franciscus

(56) References cited:
- DE-U1-202009 004 945
- GB-A- 2 445 742

## Description

### BACKGROUND OF THE INVENTION

### 1. Field of the Invention

The present invention relates to folding bicycles and more specifically, to a hinge for folding bicycles.

### 2. Description of the Related Art

Folding bicycles are bicycles that have at least one foldable part. A conventional folding bicycle uses at least one hinge at mid-, front-, or rear- frame to achieve a smaller package size. A mid-frame fold allows the folding bicycle to be folded to reduce package length. A rear frame fold allows a rear wheel to be folded relative to a frame to reduce package length. A front frame fold allows a steering assembly of the folding bicycle to be folded down to reduce a package height.

One popular folding mechanism is a four-bar linkage, such as China Patent publication No. 200620059044 or UK patent GB2445742A. The folding mechanism (hinge) comprises a stationary leaf, a moving leaf, a lever, and a rod which are pivotally connected.

DE 20 2009 004 945U1 discloses a hinge for a folding bicycle according to the preamble of claim 1, having a security quick-release lever with a reliable tension in a fastened state.

A pivotal connection is a securing manner for the traditional four-bar folding mechanism, which means the distance between any two pivotal points is constant. However, due to the secured manner applied in pivotal connections, when a folding bicycle is in a folded status, any impact on the frame or a handlepost of the steering assembly may cause damage to the components, such as the stationary leaf or the moving leaf. Such impacts occur frequently when moving or carrying folding bicycles and deter from the aesthetic appeal of folding bicycles and may reduce operability of the hinge.

Therefore, there is a need to improve the four-bar folding mechanism to mitigate and/or obviate the aforementioned problems.

### SUMMARY OF THE INVENTION

An object of the present invention is to provide a hinge for a folding bicycle that reduces impact damage to the hinge.

To achieve these objects, the hinge for a folding bicycle of the present invention includes a stationary leaf, a moving leaf with a pivot shaft, a lever and a linkage device, as specified in claim 1.

The moving leaf pivotally is connected to the stationary leaf, the lever is pivotally connected to the stationary leaf, the linkage device is pivotally connected to the lever at a first pivoting position, and the linkage device is pivotally connected to the moving leaf at a second pivoting position.

The distance between the first pivoting position and the second pivoting position is not constant.

According to the present invention, the linkage device includes a first rod pintle, a second rod pintle, a rod and a holding member. The holding member is not firmly connected with the second rod pintle and a moving gap is formed to allow the pivot shaft to move forward and backward slightly along the holding member.

According to another embodimeint (not claimed), the linkage device is an extendible linkage.

Other objects, advantages, and novel features of the invention will become more apparent from the following detailed description when taken in conjunction with the accompanying drawings. All claims are incorporated in the description by reference.

### BRIEF DESCRIPTION OF THE DRAWINGS

Fig. 1 is a perspective view of a folding bicycle.
Fig. 2 is a perspective view of a hinge for a folding bicycle in accordance with the present invention applied to a handlepost.
Fig. 3 is an exploded view of the hinge in accordance with the present invention applied to the handlepost.

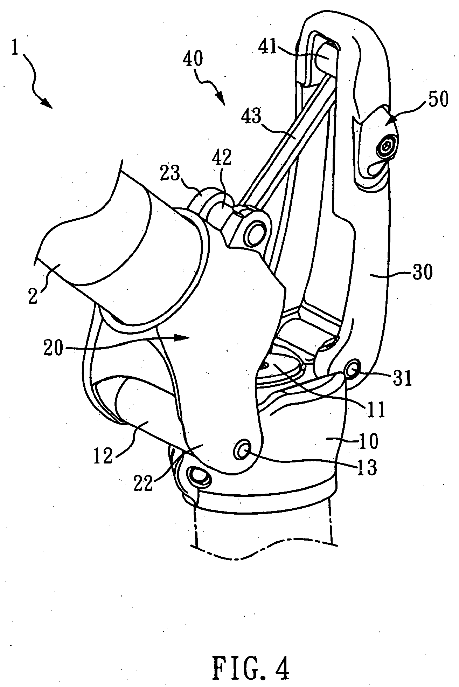

Fig. 4 is a perspective view of the hinge in accordance with the present invention applied to the handlepost, showing the hinge in a half-open state.
Fig. 5 is a perspective view of the hinge in accordance with the present invention applied to the handlepost, showing the hinge in a fully-open state.
Fig. 6 is a cross-sectional view based on Fig. 5.
Fig. 7 is a perspective view of the hinge in accordance with the present invention applied to the handlepost, showing a force applied to the hinge via the handlepost.
Fig. 8 is a cross-sectional view based on Fig. 7.
Fig. 9 is a cross-sectional view of a safety lock showing a lever is locked.
Fig. 10 is a cross-sectional view of the safety lock showing a lever is released from the safety lock.
Fig. 11 is a cross-sectional view of a hinge for another embodiment (not claimed) applied to a handlepost.
Fig. 12 is a cross-sectional view of a hinge for a folding bicycle in accordance with the present invention applied to the middle frame of the folding bicycle.
Fig. 13 is a cross-sectional view of a hinge for a folding bicycle in accordance with the present invention applied to the middle frame of the folding bicycle, showing a force is applied on the hinge.

### DETAILED DESCRIPTION OF THE PREFERRED EMBODIMENT

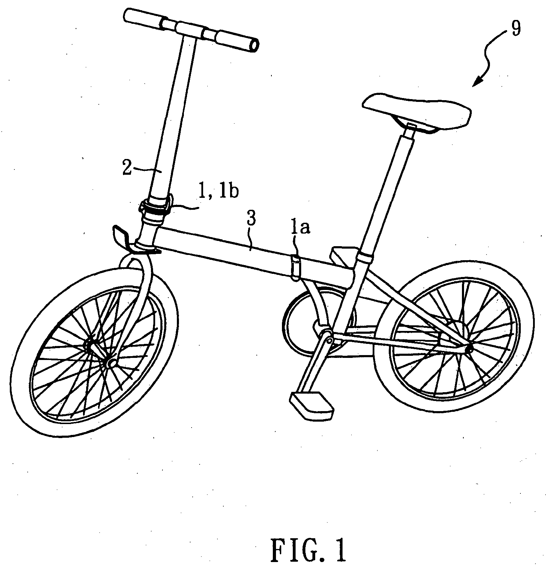

With reference to Fig. 1, a hinge 1, 1a, 1b for a folding bicycle 9 in accordance with the present invention may be applied to a handlepost 2 or an appropriate position of a frame 3 of a bicycle 9.

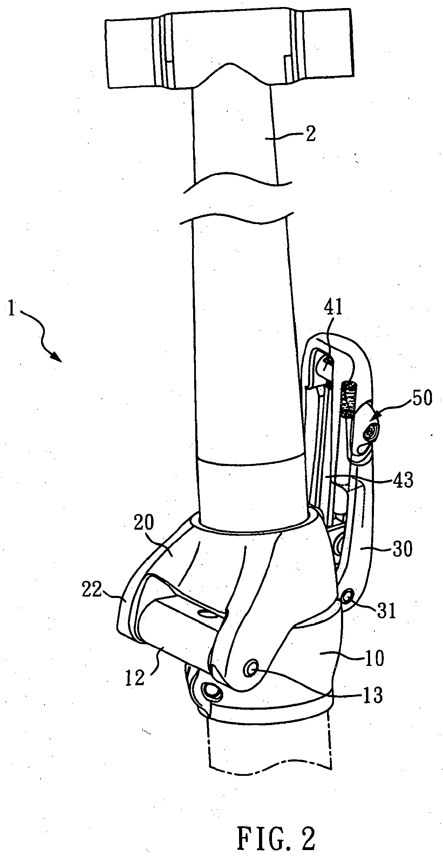

With reference to Figs. 2∼10, the hinge 1 applied to a handle-post 2 in accordance with the present invention.

Please refer to Figs. 2∼5 for the basic structure of the hinge 1. The hinge 1 comprises a stationary leaf 10, a moving leaf 20, a lever 30 and a linkage device 40 and may further comprise a safety lock 50.

The stationary leaf 10 has a stationary face 11, a stationary pintle mount 12 and a first pintle 13. The stationary pintle mount 12 is offset from the stationary face 11 according to the embodiment.

The moving leaf 20 has a moving face 21, a moving pintle mount 22 and a pivot shaft 23. The moving face 21 corresponds to and selectively abuts the stationary face 11. The first pintle 13 is mounted through the stationary and moving pintle mounts 12, 22 to allow flat folding of the hinge 1. Also, by off-setting the pintle mounts 12, 22, the hinge 1 is narrower and smaller so improving frame aesthetics and weight. The pivot shaft 23 is mounted on the moving leaf 20. According to the embodiment, the pivot shaft 23 is substantially U-shaped with holes 231.

The lever 30 is pivotally connected to the stationary leaf 10 through a lever pintle 31.

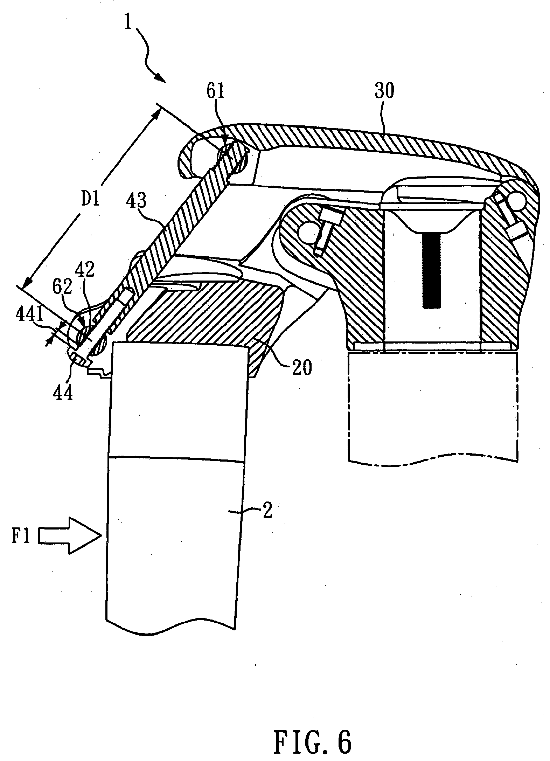

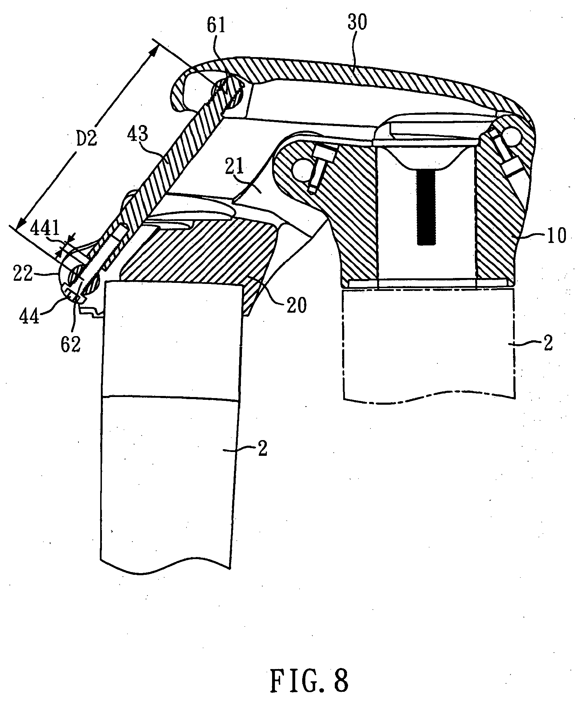

The linkage device 40 is pivotally connected to the lever 30 and the moving leaf 20. The linkage device 40 comprises a first rod pintle 41, a second rod pintle 42, a rod 43 and a holding member 44. The first rod pintle 41 is pivotally connected to the lever 30 and has a threaded hole 411. The rod 43 has a first rod end 431 and a second rod end 432. The first rod end 431 is threaded 433 for connection to the threaded hole 411 of the first rod pintle 41. The second rod pintle 42 is pivotally connected to the pivot shaft 23. The holding member 44 has a head 442 and a threaded shaft 443. The threaded shaft 443 is smaller than the hole 421 so it can freely pass through a hole 421 of the second rod pintle 42. The threaded shaft 443 engages a threaded recess (not shown) of the second rod end 432. The threaded shaft 443 is designed long enough to form a moving gap 441, preferably between 1∼10mm. The moving gap 441 is defined between the rod 43 and the head 442. The head 442 is larger than the hole 421 to prevent detachment of the second rod pintle 42 from the holding member 44. The connecting mechanism mentioned above can be further understood by viewing the cross-sectional view in Fig. 6 or Fig. 8.

Because connection of components in the connecting mechanism mentioned above are well- known, such as China Patent publication No. 200620059004, detailed description is omitted.

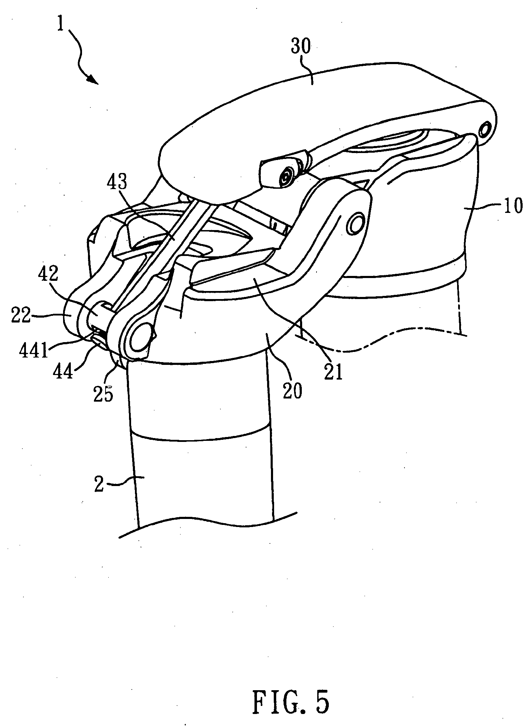

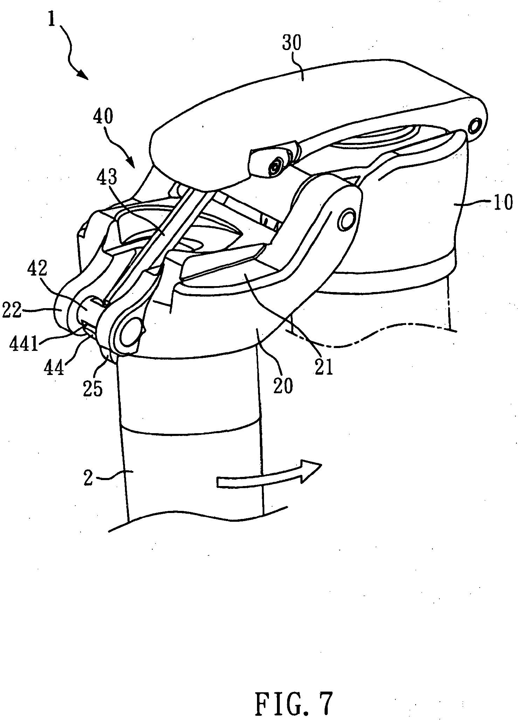

Please refer to Figs. 5∼8 for the characteristics of the present invention. With reference to Fig. 5 and Fig. 6, the hinge 1 is in a fully-open state and the handle post 2 is fully folded. When the hinge 1 fully-open, and a force F1 is applied to the handle post 2, the lever 30 or the rod 43 abuts the stationary leaf 10 or the moving leaf 20 at a contact point. Due to rules of leverage, the force F1 is proportionally increased by distance so a larger force is applied to the contact point. Conversely, the rules of leverage also mean that a larger movement of the handlepost 2 translates to a smaller movement of the lever 30. With reference to Figs. 7∼8, please note that, different from the prior arts, the holding member 44 is not static relative to the second rod pintle 42. The moving gap 441 allows relative motion between the rod pintle 42 and the lever 30. For example, when the moving gap 441 is 3 mm, then the pivot shaft 23 can move 3 mm. As exemplified in Fig. 7. Therefore, the lever 30 does not dig into or damage the stationary or moving leaves 10, 20.

With reference to the Figs. 6 and 8, a first pivoting position 61 is defined as the position where the linkage device 40 is pivotally connected to the lever 30, and a second pivoting position 62 is defined as the position where the linkage device 40 is pivotally connected to the moving leaf 20. Due to the moving gap 441, relative motion between the rod pintle 42 and the lever 30 is possible, which means the distance D1 (shown in Fig. 6), D2 (shown in Fig. 8) between the first pivoting position 61 and the second pivoting position 62 is not constant. According to the present invention, the moving gap 441 is defined as the difference between the distance D2 (maximum distance between the first pivoting position 61 and the second pivoting position 62) and the distance D1 (minimum distance between the first pivoting position 61 and the second pivoting position 62), namely D2-D1, and is the moving gap 441 is preferably between 1 mm to 10 mm. The advantage of the present invention is when the lever 30 abuts the faces of the stationary and moving leaves 10, 20, further opening the hinge 1 causes the linkage device 40 (floating mechanism) to extend. Especially when applied to handleposts 2 or bicycle frames 3, the linkage device 40 (floating mechanism) allows further movement so preventing leverage action damaging the lever 30 or faces of the stationary and moving leaves 10, 20 and reducing requirements for precise machining and formation of the hinge 1 and components so lowering rejection rates and breakages through use.

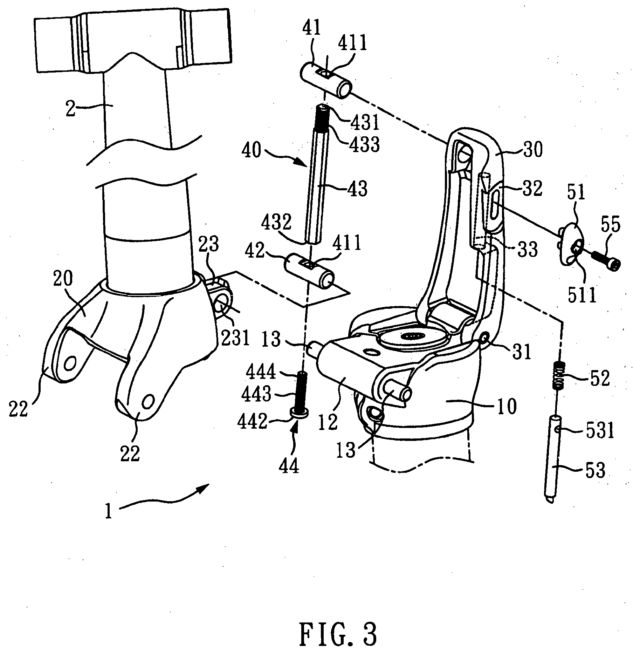

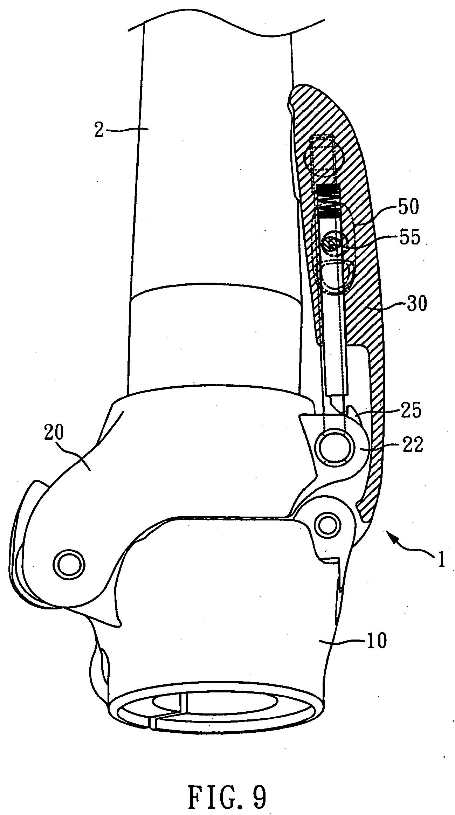

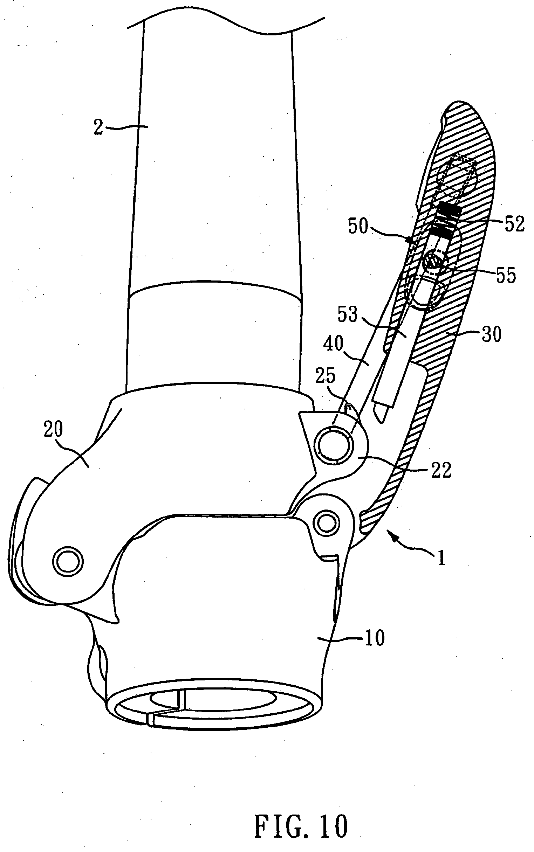

Please refer to Fig. 3, Fig. 5 and Figs. 9∼10 for a safety lock 50 according to the present invention. The safety lock 50 is mounted with the lever 30, whereby a user needs to open the safety lock 50 to release the lever 30 when the hinge 1 is closed (Fig. 9). The safety lock 50 comprises a button 51, a spring 52, a lock rod 53 and a lock bolt 55. The spring 52 and the lock rod 53 are located in a channel 33 of the lever 30. The button 51 is mounted on the recess 32 through the lock bolt 55. The lock bolt 55 also connects the button 51 to the lock rod 53 through small holes 511, 531 so that moving the button 51 also moves the lock rod 53, simultaneously. With reference to the Fig. 9, the lock rod 53 is engaged with a hook 25 of the moving leaf 20 (also refer to Fig. 5). To open the lever 30, the button 51 must be pulled backward first to disengage the lock rod 53, as shown in Fig. 10. When the user wants to lock the hinge 1, the lever 30 is pushed toward the handle post 2 and the lock rod 53 automatically engages the hook 25 again, as shown in Fig. 9.

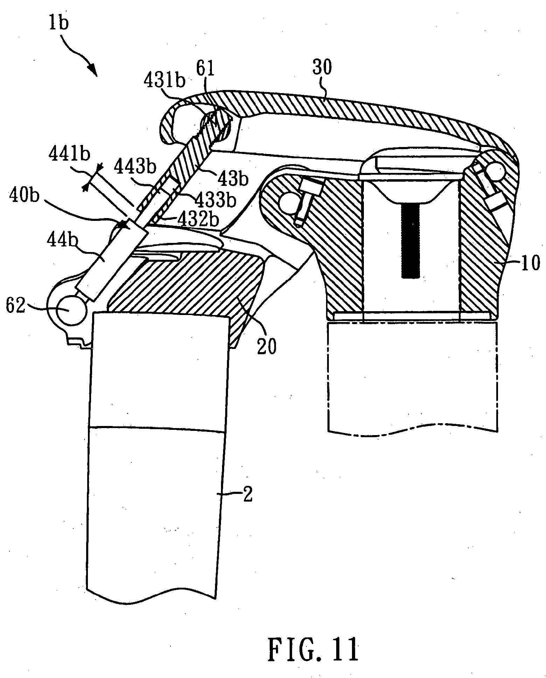

With reference to the Fig. 11, a hinge for another embodiment (not claimed) applied to the handlepost 2. The hinge 1b also comprises a stationary leaf 10, a moving leaf 20, a lever 30 and a linkage device 40b. The major difference is that the linkage device 40b of the hinge 1b is an extendible linkage. The linkage device 40b includes a rod 43b and a holding member 44b.

The rod 43b of the hinge 1b has a slide channel 433b formed in the second rod end 432b of the rod 43b and pivotally connected to the lever 30 at the first rod end 431b. The slide channel 433b is formed longitudinally in the rod 43b and may be a longitudinal groove or a longitudinal hole formed in the rod 43b.

The holding member 44b is partially mounted inside the channel 433b. The holding member 44b has a smooth shaft 443b slidably mounted in the slide channel 433b of the rod 43b. One end of the holding member 44b is pivotally connected to the moving leaf 20, and the other end of the holding member 44b is mounted inside the channel 433b. The linkage device 40b is also pivotally connected to the lever 30 on the first pivoting position 61 and the moving leaf 20 on the second pivoting position 62. The smooth shaft 443b is able to move inward and outward with a moving gap 441b. Therefore, the distance between the first pivoting position 61 and the second pivoting position 62 is not constant so defines the moving gap 441b. Similarly the difference between the maximum and minimum distance between the first pivoting position 61 and the second pivoting position 62 is preferably 1 mm to 10 mm.

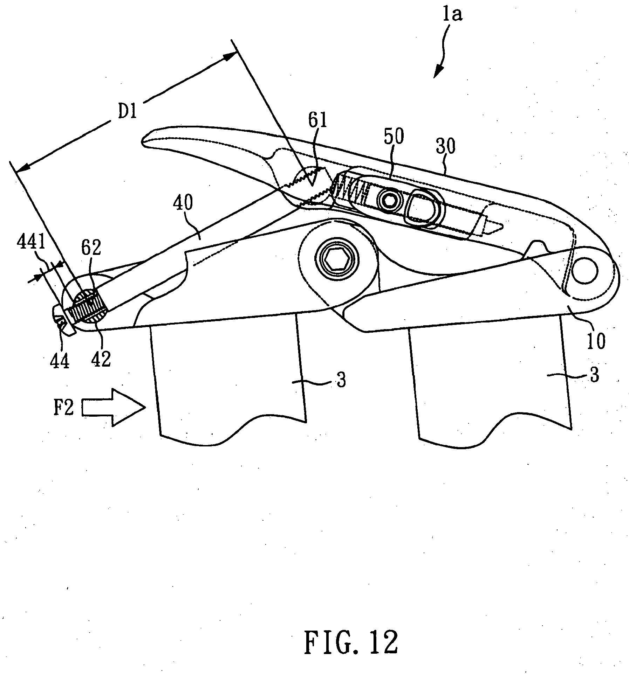

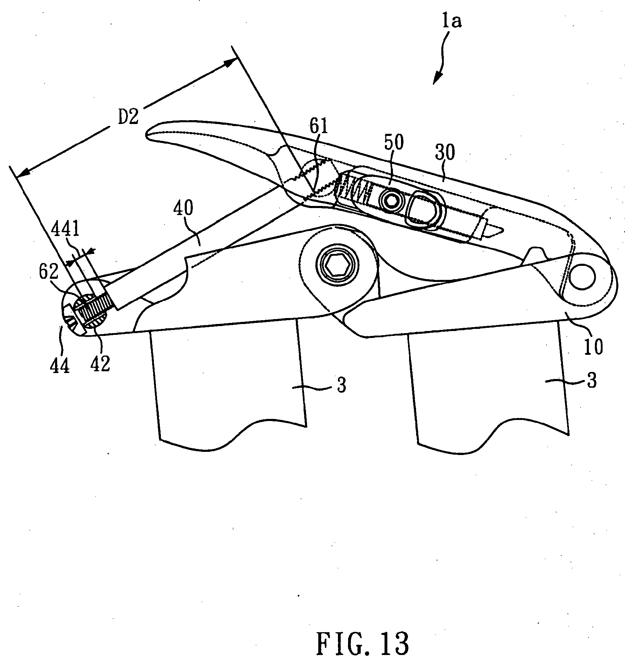

Please refer to Fig. 1 and Fig. 12∼13 for a hinge 1a applied to the frame 3 in accordance with the present invention. The hinge 1a uses the same idea as that of the hinge 1. The hinge 1a also comprises a stationary leaf 10, a moving leaf 20, a lever 30, linkage device 40 and a safety lock 50. Fig. 12 and Fig. 13 are corresponded to Fig. 6 and Fig. 8 respectively. The hinge 1a is under the fully open stage and the frame 3 is fully folded. With reference to the Fig. 12, similarly, when a force F2 push the frame 3, because of the moving gap 441 (1∼10 mm preferably), the lever 30 or the rod 43 will not move downward (or move downward lesser) to damage the stationary leaf 10 and the moving leaf 20. With reference to the Fig. 13, the position of the moving gap 441 in Fig. 12 is changed to the other side of the second rod pintle 42. Since the moving gap 441, the pivot shaft 23 can move slightly along the holding member 44 forward and backward, which means the distance D1 (shown in Fig. 12), D2 (shown in Fig. 13) between the first pivoting position 61 and the second pivoting position 62 is not constant according to the present invention. According to experiments, D2-D1 (i.e. equal to the length of the moving gap 441) between 1 mm to 10 mm is suggested.

Although the present invention has been explained in relation to its preferred embodiment, it is to be understood that many other possible modifications and variations can be made without departing from the scope of the invention as hereinafter claimed. For example, the hinge 1b with an extendable linkage device 40b can also applied to the frame 3.

## Claims

1. A hinge (1,1a,1b) for a folding bicycle (9) comprising a stationary leaf (10), a moving leaf (20), a lever (30) and a linkage device (40), wherein the moving leaf (20) is pivotally connected to the stationary leaf (10), the lever (30) is pivotally connected to the stationary leaf (10), the linkage device (40) is pivotally connected to the lever (30) at a first pivoting position (61), and the linkage device (40) is pivotally connected to the moving leaf (20) at a second pivoting position (62),
wherein the distance between the first pivoting position (61) and the second pivoting position (62) is not constant,
wherein the difference between the maximum and minimum distance between the first pivoting position (61) and the second pivoting position (62) is 1 mm to 10 mm,
wherein the linkage device (40) comprises:
a first rod pintle (41) pivotally connected to the lever (30);
a second rod pintle (42) with a hole (421) and pivotally connected to the moving leaf (20);
a rod (43) with a first rod end (431) and a second rod end (432), wherein the first rod end (431) is connected with the first rod pintle (41); and
a holding member (44) passing through the hole (421) and connecting with the second rod end (432) to keep the second rod pintle (42) between the holding member (44) and the rod (43),
wherein the moving leaf (20) has a pivot shaft (23), and the second rod pintle (42) is pivotally connected to the pivot shaft (23),
**characterized in that** the holding member (44) has a head (442) and a shoulder (443), and the shoulder (443) passes through the hole (421) and forms a moving gap (441), so that the pivot shaft (23) can move slightly along the holding member (44) forward and backward.

2. The hinge (1,1a) as claimed in claim 1, wherein the pivot shaft (23) is substantially U-shaped.

3. The hinge (1,1a) as claimed in claim 2, wherein the hinge (1,1a) further comprises a safety lock (50) mounted with the lever (30), whereby a user needs to open the safety lock (50) to release the lever (30) when the hinge (1) is closed.

4. The hinge (1,1a) as claimed in claim 3, wherein the lever (30) further comprises a channel (33), and the safety lock (50) comprises:
a button (51);
a spring (52);
a lock rod (53), wherein the spring (52) and the lock rod (53) are located in a channel (33); and
a lock bolt (55) connects the button (51) and the lock rod (53) so that by moving the button (51) the lock rod (53) can also move simultaneously.

5. The hinge (1,1a) as claimed in claim 4, wherein the moving leaf (20) further comprises a hook (25), whereby when the hinge (1, 1a) is closed, the lock rod (53) is engaged with the hook (25).

## Patentansprüche

1. Scharnier (1, 1a, 1b) für ein Klappfahrrad (9), umfassend einen stationären Flügel (10), einen beweglichen Flügel (20), einen Hebel (30) und ein Verbindungselement (40), wobei der bewegliche Flügel (20) schwenkbar mit dem stationären Flügel (10) verbunden ist, der Hebel (30) schwenkbar mit dem stationären Flügel (10) verbunden ist und das Verbindungselement (40) schwenkbar mit dem Hebel (30) in einer ersten Schwenkposition (61) verbunden ist und das Verbindungselement (40) schwenkbar mit dem beweglichen Flügel (20) in einer zweiten Schwenkposition (62) verbunden ist,
wobei der Abstand zwischen der ersten Schwenkposition (61) und der zweiten Schwenkposition (62) nicht konstant ist,
wobei der Unterschied zwischen dem maximalen und dem minimalen Abstand zwischen der ersten Schwenkposition (61) und der zweiten Schwenkposition (62) zwischen 1 mm und 10 mm beträgt,
wobei das Verbindungmittel (40) umfasst:
einen ersten stabförmigen Zapfen (41), der drehbar am Hebel (30) befestigt ist;
einen zweiten stabförmigen Zapfen (42) mit einer Öffnung (421), der drehbar am beweglichen Flügel (20) befestigt ist;
eine Stange (43) mit einem ersten Stangenende (431) und einem zweiten Stangenende (432), wobei das erste Stangenende (431) mit dem ersten stabförmigen Zapfen (41) verbunden ist; und
ein Halteglied (44), welches die Öffnung (421) durchgreift und welches mit dem zweiten Stangenende (432) verbunden ist, um den zweiten stabförmigen Zapfen (42) zwischen dem Halteglied (44) und der Stange (43) zu halten,
wobei der bewegliche Flügel (20) eine Drehspindel (23) aufweist und der zweite stabförmige Zapfen (42) mit der Drehspindel (23) schwenkbar verbunden ist,
**dadurch gekennzeichnet,**
**dass** das Halteglied (44) einen Kopf (442) und eine Schulter (443) aufweist und dass die Schulter (443) die Öffnung (421) durchgreift und eine sich bewegende Aussparung (441) bildet, so dass die Drehspindel (23) sich ein wenig entlang des Haltegliedes (44) vor und zurück bewegen kann.

2. Scharnier (1, 1a) nach Anspruch 1, wobei die Drehspindel (23) im Wesentlichen U-förmig ausgestaltet ist.

3. Scharnier (1, 1a) nach Anspruch 2, wobei das Scharnier (1, 1a) weiterhin einen Sicherheitsverschluss (50) umfasst, der an dem Hebel (30) festgelegt ist, wobei eine Bedienperson den Sicherheitsverschluss (50) öffnen muss, um den Hebel (30) zu lösen, wenn das Scharnier (1) geschossen ist.

4. Scharnier (1, 1a) nach Anspruch 3, wobei der Hebel (30) weiterhin einen Kanal (33) umfasst und der Sicherheitsverschluss (50) aufweist:
einen Knopf (51);
eine Feder (52);
einen Schließhebel (53), wobei die Feder (52) und der Schließhebel (53) in dem Kanal angeordnet sind; und
ein Schließbolzen (55) den Knopf (51) und den Schließhebel (53) verbindet, so dass, wenn der Knopf (51) bewegt wird, der Schließhebel (53) sich auch simultan mit bewegen kann.

5. Scharnier (1, 1a) nach Anspruch 4,2wobei der bewegliche Flügel (20) weiterhin noch einen Haken (25) umfasst, wobei, wenn das Scharnier (1, 1a) geschlossen ist, der Schließhebel (53) mit dem Haken (25) in Wirkverbindung steht.

## Revendications

1. Charnière (1, 1a, 1b) pour une bicyclette pliable (9) comprenant un volet fixe (10), un volet mobile (20), un levier (30) et un dispositif de biellette (40), dans lequel le volet mobile (20) est relié à pivotement au volet fixe (10), le levier (30) est relié à pivotement au volet fixe (10), le dispositif de biellette (40) est relié à pivotement au levier (30) en une première position de pivotement (61) et le dispositif de biellette (40) est relié à pivotement au volet mobile (20) en une seconde position de pivotement (62),
dans laquelle la distance entre la première position de pivotement (61) et la seconde position de pivotement (62) n'est pas constante,
dans laquelle la différence entre la distance maximum et minimum entre la première position de pivotement (61) et la seconde position de pivotement (62) est de 1 mm à 10 mm,
dans laquelle le dispositif de biellette (40) comprend :
un premier axe de tige (41) relié à pivotement au levier (30) ;
un second axe de tige (42) avec un trou (421) et relié à pivotement au volet mobile (20) ;
une tige (43) avec une première extrémité de tige (431) et une seconde extrémité de tige (432), dans laquelle la première extrémité de tige (431) est reliée au premier axe de tige (41) ; et
un élément de support (44) passant à travers le trou (421) et relié à la seconde extrémité de tige (432) pour garder le second axe de tige (42) entre l'élément de support (44) et la tige (43),
dans laquelle le volet mobile (20) comporte un axe de pivot (23), et le second axe de tige (42) est relié à pivotement à l'axe de pivot (23),
**caractérisé en ce que** l'élément de support (44) comporte une tête (442) et un épaulement (443), et l'épaulement (443) passe à travers le trou (421) et forme un jeu mobile (441), de telle manière que l'axe de pivot (23) peut se déplacer légèrement le long de l'élément de support (44) en avant et en arrière.

2. Charnière (1, 1a) selon la revendication 1, dans laquelle l'axe de pivot (23) est sensiblement en forme de U.

3. Charnière (1, 1a) selon la revendication 2, dans laquelle la charnière (1, 1a) comprend en outre un verrou de sûreté (50) monté avec le levier (30), moyennant quoi un utilisateur doit ouvrir le verrou de sûreté (50) pour libérer le levier (30) quand la charnière (1) est fermée.

4. Charnière (1, 1a) selon la revendication 3, dans laquelle le levier (30) comprend en outre un canal (33), et le verrou de sûreté (50) comprend :
un bouton (51) ;
un ressort (52) ;
une tige de verrou (53), dans laquelle le ressort (52) et la tige de verrou (53) sont situés dans un canal (33) ; et
un boulon de sûreté (55) relie le bouton (51) et la tige de verrou (53) de telle manière qu'en déplaçant le bouton (51) la tige de verrou (53) peut aussi se déplacer simultanément.

5. Charnière (1, 1a) selon la revendication 4, dans laquelle le volet mobile (20) comprend en outre un crochet (25), moyennant quoi quand la charnière (1, 1a) est fermée, la tige de verrou (53) est en prise avec le crochet (25).
